# EUROPEAN PATENT APPLICATION

(11) **EP 4 250 168 A1**
(43) Date of publication of application: **27.09.2023**
(21) Application number: 22164518.7
(22) Date of filing: 25.03.2022
(51) Int. Cl.: G06F 30/27, G06F 30/20, B60R 25/00, G06N 20/20

(54) **A DIGITAL TWIN AND A METHOD FOR A HEAVY-DUTY VEHICLE**

(71) Applicant: Volvo Truck Corporation, 405 08 Göteborg (SE)
(72) Inventor: RYDSTRÖM, Mats, 427 39 Billdal (SE); ROSGARDT, Tommy, 437 35 Lindome (SE); BENGTSSON, Ingmar, 437 93 Lindome (SE)
(74) Representative: Valea AB

(57) **Abstract**

The invention relates to a digital twin (105) for a heavy-duty vehicle (100). The digital twin (105) comprises a digital model of the heavy-duty vehicle (100). The digital twin (105) comprises one or more interfaces (115). Each interface (115) is arranged to connect to a replaceable digital module (118) associated with an auxiliary device (110) of the heavy-duty vehicle (100).

## Description

### TECHNICAL FIELD

The invention relates to a digital twin for a heavy-duty vehicle and a method performed by the digital twin.

The invention can be applied in heavy-duty vehicles, such as trucks, buses, and construction equipment. Although the invention will be described with respect to a heavy-duty vehicle, the invention is not restricted to this particular vehicle, but may also be used in other vehicles such as trailers, wheel loaders, articulated haulers, excavators, backhoe loaders, passenger cars, marine vessels, working machines, etc. The term vehicle will be used herein when referring to any of the above types of vehicles.

### BACKGROUND

A digital twin is a concept used in several field of technology to digitally model physical objects, for example vehicles, medical equipment, communication networks etc.

The digital twin may be described as a digital representation or a digital model the physical object. The term virtual representation and virtual model may also be used for the digital twin. The digital twin is a digital representation of all components of the physical object. The digital twin mirrors the reality, i.e. the real physical object.

The digital twin is arranged to obtain real-time and real-world operational data of the physical object, e.g. real-time operational data, such that when a change occurs of the physical object in the real world, then the digital twin is up to date with these changes. The digital twin is arranged to dynamically change in accordance with real-world changes of the physical object. This is different from general computer simulations which are not based on real-time data. Based on the operational data of the physical object, the digital twin may be arranged to model or predict operation of the physical object. The digital twin is arranged to simulate what is actually happening to an actual physical object in the real world, which is different to a simulation which simulates what could happen to a physical object.

In the vehicle industry, the concept of digital twin is used to obtain knowledge and to model various aspects of the vehicle, for example to model expected fuel consumption for a given scenario, predict a maintenance need etc. However, there is a constant need to further improve the digital twin.

### SUMMARY

An object of the invention is to provide an improved digital twin for a heavy-duty vehicle.

According to a first aspect of the invention, the object is achieved by a digital twin for a heavy-duty vehicle according to claim 1. The digital twin comprises a digital model of the heavy-duty vehicle. The digital twin comprises one or more interfaces. Each interface is arranged to connect to a replaceable digital module associated with an auxiliary device of the heavy-duty vehicle. With the interface to connect to a replaceable digital module associated with an auxiliary device of the heavy-duty vehicle, an improved digital model for the heavy-duty vehicle is provided. The accuracy of the digital twin is improved since it, in addition to the digital model of the heavy-duty vehicle, also is arranged to take a replaceable digital module associated with the auxiliary device into account. With this, a complete digital model of the heavy-duty vehicle, including the replaceable digital module, may be provided.

According to an embodiment, the digital twin may be arranged to model power drawn by the auxiliary device in response to an operating state of the auxiliary device. An advantage of this may be that it is possible to provide an indication of the influence in terms of power consumption by connecting the replaceable digital module to the heavy-duty vehicle. A decision may be taken to determine whether or not the power drawn by the auxiliary device is acceptable or not, i.e. whether or not the physical auxiliary device should be connected to the physical vehicle. Taking the operating state into account may increase the accuracy in the modelling.

According to a further embodiment, each interface may be arranged to transfer data between the digital twin and the replaceable digital module indicative of the power drawn by the auxiliary device in response to an operating state of the auxiliary device. The modeling may be based on the data indicative of the power. An advantage of this may be that it is possible to provide an indication of the influence in terms of power consumption by connecting the replaceable digital module to the heavy-duty vehicle. A decision may be taken to determine whether or not the power drawn by the auxiliary device is acceptable or not, i.e. whether or not the physical auxiliary device should be connected to the physical vehicle. Taking the data indicative of the power into account may increase the accuracy in the modelling.

According to a further embodiment, the digital twin may be arranged to take vehicle state of the heavy-duty vehicle into account when modelling the power. When taking the vehicle state into account, an even more improved digital twin may be provided. An advantage of this may be that additional scenarios for modelling the power with the digital twin may be provided. Taking the vehicle state into account may increase the accuracy in the modelling.

According to another embodiment, the auxiliary device may be, but not limited to, a tail lift, a crane, a cement mixer, a hook-lift, a cooler, a waste compressor. Thus, the digital twin may be arranged to model a variety of auxiliary devices. The digital twin is arranged to model any of these auxiliary devices, i.e. it is flexible and adaptable.

According to yet another embodiment, the digital twin may comprise a digital model of the heavy-duty vehicle's operating environment, and the modelling of the power may take the operating environment into account. When taking the operating environment into account, an increase accuracy in the modelling may be provided.

According to a further embodiment, the digital twin may be arranged to compare the modelled power drawn by the auxiliary device with expected power available by the heavy-duty vehicle. The digital twin may be arranged to determine, based on a result of the comparison, if the expected power available by the heavy-duty vehicle is sufficient to power to the auxiliary device. Thus, the digital twin may be arranged to provide an indication of whether or not it is possible to power the auxiliary drive with power available by the heavy-duty vehicle and if an external power source(s) is necessary.

According to a further embodiment, the digital twin may be arranged to model power drawn by multiple auxiliary devices of different types. The digital twin may be arranged to compare the modelled power of the multiple auxiliary devices. The digital twin may be arranged to determine, based on a result of the comparison, which of the multiple auxiliary devices that draws the highest or lowest amount of power. An advantage of this may be that it may be possible to select the auxiliary device that is more favourable from a power consumption perspective, e.g. the one that draws less power.

According to a second aspect of the invention, the object is achieved by a method performed by the digital twin according to claim 9. The method is for a heavy-duty vehicle. The digital twin comprises a digital model of the heavy-duty vehicle and the digital twin comprises one or more interfaces. The digital twin connects, via the interface, to a replaceable digital module associated with an auxiliary device of the heavy-duty vehicle. Advantages and effects of the method are largely analogous to the advantages and effects of the digital twin. Further, all embodiments of the digital twin are applicable to and combinable with all embodiments of the method, and vice versa.

According to an embodiment, the digital twin may model power drawn by the auxiliary device in response to an operating state of the auxiliary device.

According to a further embodiment, the modeling may be based on data indicative of the power, and the data may be transferred between the digital twin and the replaceable digital module via each interface.

According to a further embodiment, a vehicle state of the heavy-duty vehicle may be taken into account when modelling the power.

According to a further embodiment, the auxiliary device may be, but not limited to, a tail lift, a crane, a cement mixer, a hook-lift, a cooler, a waste compressor.

According to another embodiment, the digital twin may comprise a digital model of the heavy-duty vehicle's operating environment, and the modelling of the power may take the operating environment into account.

According to another embodiment, the digital twin may compare the modelled power drawn by the auxiliary device with expected power available by the heavy-duty vehicle. The digital twin may determine, based on a result of the comparison, if the expected power available by the heavy-duty vehicle is sufficient to power to the auxiliary device.

According to another embodiment, the digital twin may model power drawn by multiple auxiliary devices of different types. The digital twin may compare the modelled power of the multiple auxiliary devices. The digital twin may determine, based on a result of the comparison, which of the multiple auxiliary devices that draws the highest or lowest amount of power.

According to a third aspect of the invention, the object is achieved by a heavy-duty vehicle according to claim 17. The heavy-duty vehicle comprises the digital twin of the first aspect. Advantages and effects of the method are largely analogous to the advantages and effects of the heavy-duty vehicle. Further, all embodiments of the digital twin are applicable to and combinable with all embodiments of the heavy-duty vehicle, and vice versa.

According to a fourth aspect of the invention, the object is achieved by a computer program according to claim 18. The computer program comprises program code means for performing the steps of the method of the first aspect when the program is run on a computer.

According to a fifth aspect of the invention, the object is achieved by a computer readable medium according to claim 19. The computer readable medium carries a computer program comprising program code means for performing the method of the first aspect when the program product is run on a computer.

Further advantages and advantageous features of the invention are disclosed in the following description and in the dependent claims. A person skilled in the art will recognize additional features and advantages upon reading the following detailed description.

### BRIEF DESCRIPTION OF THE DRAWINGS

With reference to the appended drawings, below follows a more detailed description of embodiments of the invention cited as examples.

In the drawings:
- Fig. 1: is a schematic drawing illustrating a digital twin and a heavy-duty vehicle.
- Fig. 2: is a flow chart illustrating a method.
- Fig. 3a: is a schematic drawing illustrating a digital twin.
- Fig. 3b: is a schematic drawing illustrating a digital twin.

The drawings are not necessarily to scale and the dimensions of certain features may have been exaggerated for the sake of clarity. Emphasis is instead placed upon illustrating the principle of the embodiments herein.

### DETAILED DESCRIPTION OF EXAMPLE EMBODIMENTS OF THE INVENTION

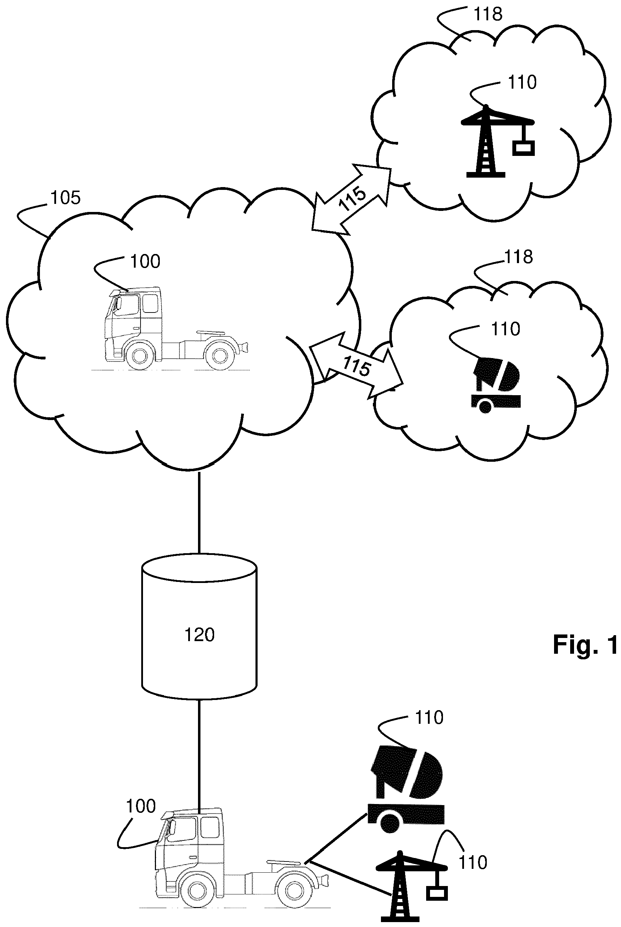

**Fig. 1** is a schematic drawing illustrating a **vehicle 100.** The vehicle 100 may be a heavy-duty vehicle such as for example a truck, buss, construction equipment. The vehicle 100 may also be other vehicles such as trailers, wheel loaders, articulated haulers, excavators, backhoe loaders, passenger cars, marine vessels, working machines, etc. For the sake of simplicity, the term vehicle will be used herein when referring to any of the above examples of vehicles.

One or more **auxiliary devices 110** may be connected to the vehicle 100, i.e. the physical real-life vehicle 100. The one or more auxiliary devices 110 may be, but not limited to, for example a tail lift, a crane, a cement mixer, a hook-lift, a cooler or a waste compressor.

Fig. 1 illustrates a **digital twin 105.** The digital twin 105 may be described as a digital representation or a digital model the vehicle 100. The term virtual representation and virtual model may also be used for the digital twin 105. The digital twin 105 is a digital representation of all components of the vehicle 100. The digital twin 105 mirrors the reality, i.e. the real vehicle 100. The digital twin 105 may be referred to as a first digital twin.

The digital twin 105 may be comprised in the vehicle 100 or, in a computer system or in a cloud solution. The digital twin 105 may be a software in a fix location or as a set of distributed software packages that are interaction to the overall analysis performance, fix location or moving based on usage and other performance factors. The digital twin 105 may be completely comprised in the vehicle 100 or it may be completely comprised in another unit, e.g. a computer unit remotely located from the vehicle 100. The digital twin 105 may be distributed such that a first part of the digital twin 105 is located at a first location, e.g. comprised in the vehicle 100, and a second part of the digital twin 105 is located at a second location, e.g. comprised in a remote computer unit.

The digital twin 105 is arranged to obtain real-time and real-world operational data of the vehicle 100, e.g. real-time operational data, such that when a change occurs of the vehicle 100 in the real world, then the digital twin 105 is up to date with these changes.

The digital twin 105 and the vehicle 100 are therefore arranged to be connected to each other, via a wired communication link or a wired communication link. The digital twin 105 is arranged to dynamically change in accordance with real-world changes of the vehicle 105. This is different from general computer simulations which are not based on real-time data. Based on the operational data of the vehicle 100, the digital twin 105 may be arranged to model or predict operation of the vehicle 100, for example to model expected fuel consumption for a given scenario, predict a maintenance need etc. The digital twin 105 is arranged to simulate what is actually happening to an actual vehicle 100 in the real world, which is different to a simulation which simulates what could happen to a vehicle. The digital twin 105 is arranged to display the result of its modelling for example on a display of a tablet computer, a mobile phone, a stationary computer etc.

The digital twin 105 may be configured to access another digital model of the operating environment in which the heavy-duty vehicle 100 is expected to operate. Using other words, the first digital twin 105 may access a second digital twin which comprises a digital model of the the operating environment in which the heavy-duty vehicle is expected to operate. With the second digital twin, the first digital twin 105 may be configured to model an operating environment of the heavy-duty vehicle 100. Thus, there may be a first digital twin for the vehicle 100 and a second digital twin for the operating environment digital twin. Together, these digital models or digital twins may be described as a digital twin system comprising the first digital twin 105 and the second digital twin.

The operating environment may describe the environment which the vehicle 100 is expected to operate in or which it commonly operates in. The operating environment may be common loads, encountered road conditions such as gravel, low friction, temperature, humidity etc. The operating environment may be an operating condition.

The digital twin 105 comprises one or more **interfaces 115.** Each interface 115 is arranged to connect to a **replaceable digital module 118** associated with an auxiliary device 110 of the heavy-duty vehicle 100. The digital twin 105 is arranged to access the replaceable digital module 118 associated with an auxiliary device 110 of the heavy-duty vehicle 100. The replaceable digital module 118 may be a digital twin of the auxiliary device 110, i.e. a digital model of the auxiliary device 110. The replaceable digital module 118 may be described as a third digital twin. The third digital twin may be comprised in the digital twin system, as described above, together with the first digital twin and the second digital twin. The replaceable digital module 118 may be a plug-in module. The replaceable digital module 118 may be a third-party plug-in module.

The one or more interfaces 115 may be referred to as a socket. There may be one interface 115 for each replaceable digital module 118, and there may be one replaceable digital module 118 for each auxiliary device 110. For example, if connecting a crane and a cement mixer to the vehicle 100 is to be modelled, then there may be one interface 115 to a replaceable digital module associated with the crane and another interface 115 to a replaceable digital module associated with the cement mixer.

The digital twin 105 may be arranged to model power drawn by the auxiliary device 110 in response to an operating state of the auxiliary device 110. Each interface 115 may be arranged to transfer data between the digital twin 105 and the replaceable digital module 118 indicative of the power drawn by the auxiliary device 110 in response to an operating state of the auxiliary device 110, and the modeling of the power drawn by the auxiliary device may be based on the data indicative of the power. The digital twin 105 may be arranged to take vehicle state of the heavy-duty vehicle 100 into account when modelling the power. The digital twin 105 may be arranged to take the the operating environment into account when modelling the power. The digital twin 105 may be arranged to model a cost of operating the auxiliary device 110, i.e., a cost of providing connectivity to the vehicle 100.

The modelled power may be an average power, it may be for a certain time period, it may be for a certain transport mission that the vehicle 100 will perform etc. The modelled power may be for a part of the transport mission or the complete transport mission. A transport mission comprises use of the auxiliary device 110 and the use may be for example to load, unload, dig, pump, plow etc.

The digital twin 105 may be arranged to compare the modelled power drawn by the auxiliary device 110 with expected power available by the heavy-duty vehicle 100. The expected power that is available by the heavy-duty vehicle 100 may be an average expected power, it may be the expected power for a certain time period, it may be the expected power for a part of or a complete transport mission that the heavy-duty vehicle 100 will perform etc.

The digital twin 105 may be arranged to determine, based on a result of the comparison, if the expected power available by the heavy-duty vehicle 100 is sufficient to power to the auxiliary device 110. With the determining, the digital twin 105 may be arranged to determine if the expected power available by the heavy-duty vehicle 100 is sufficient to power to the auxiliary device 110 in average, for a certain time period, for a part of or a complete transport mission etc. The digital twin 105 may be arranged to take variations such as transport mission, environmental factors, weather, traffic etc. into account when determining if the expected power available by the heavy-duty vehicle 100 is sufficient to power to the auxiliary device 110.

The digital twin 105 may be arranged to compare different bodies within the same application and segment, within different applications, compare each body function and activity when determining if the expected power available by the heavy-duty vehicle 100 is sufficient to power to the auxiliary device 110.

The digital twin 105 may be arranged to model power drawn by multiple auxiliary devices 110 of different types. The digital twin 105 may be arranged to compare the modelled power of the multiple auxiliary devices 110, and to determine, based on a result of the comparison, which of the multiple auxiliary devices 110 that draws the highest or lowest amount of power. In other words, the digital twin 105 may be arranged to determine a performance of each of the auxiliary devices 110. The digital twin 105 may be arranged to arrange or structure the performance of each of the auxiliary devices 110 in different activity or performance bins.

The digital twin 105 may be implemented on and run on a **computer unit 120.** The computer unit 120 may comprise for example a processor, a memory storage, a communication interface etc. The computer unit 120 may comprise hardware and software. The computer unit 120 is arranged to enable data transfer between the vehicle 100 and the digital twin 105. The computer unit 120 may be arranged to store data obtained from the vehicle 100 and the digital twin 105, e.g. in a local memory unit comprised in the computer unit 120, in a central memory unit, in a cloud memory unit etc. The computer unit 120 and the vehicle 100 may be located at the same location or in different locations. A first part of the computer unit 120 may be comprised in the vehicle 100 and a second part of the computer unit 120 may be comprised in another unit remotely located from the vehicle 100, i.e. the computer unit 120 may be a distributed computer unit. The computer unit 120 may be a remote server or comprised in a remote server which is remotely located with respect to the vehicle 100. The computer unit 120 may be partly or completely comprised in the vehicle 100.

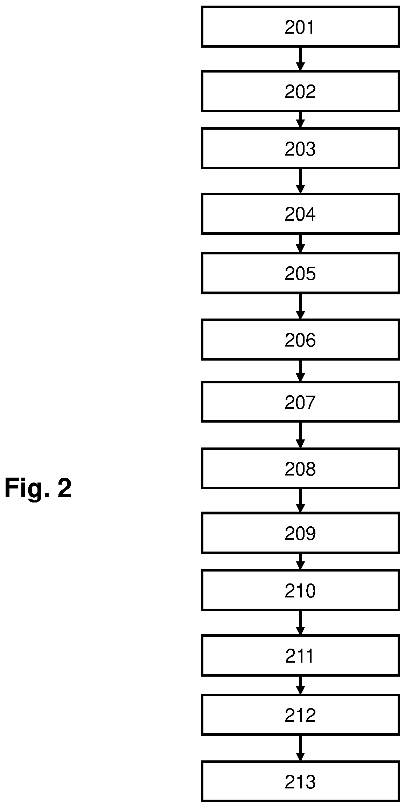

Fig. 2 is a flow chart illustrating a method performed by the digital twin 105. As mentioned earlier, the digital twin 105 comprises a digital model of the heavy-duty vehicle 100, and the digital twin 105 comprises one or more interfaces 115. The digital twin 105 may comprise a digital model of the heavy-duty vehicle's 100 operating environment. The method comprises at least one of the following steps, which steps may be performed in any suitable order than described below:

### Step 201

The digital twin 105 connects, via each interface 115, to a replaceable digital module 118 associated with an auxiliary device 110 of the heavy-duty vehicle 100.

The auxiliary device 110 may be, but not limited to, a tail lift, a crane, a cement mixer, a hook-lift, a cooler, a waste compressor.

### Step 202

The digital twin 105 may model the power drawn by the auxiliary device 110 in response to an operating state of the auxiliary device 110. The operating state may be that the auxiliary device 110 is running, that the auxiliary device 110 is turned off, that the auxiliary device 110 is on and in a power-saving state etc.

The modeling may be based on data indicative of the power, and the data may be transferred between the digital twin 105 and the replaceable digital module 118 via the interface 115.

A vehicle state of the heavy-duty vehicle 100 may be taken into account when modelling the power. The vehicle state, also referred to as vehicle mode, may be the geographical position of the vehicle 100, that the vehicle 100 is driving, loading idling etc.

The modelling of the power may take the operating environment into account. The operating environment may be the environment in which the vehicle 100 is operating, e.g., common loads, encountered road conditions such as gravel, low friction, temperature, humidity etc. The modelling of the power may take the operating environment into account by accessing a digital twin of the operating environment.

The digital twin 105 may model the power drawn by the vehicle 100 and the auxiliary device 110 together.

The modelled power may be an average power, it may be for a certain time period, it may be for a certain transport mission that the vehicle 100 will perform etc. The modelled power may be for a part of transport mission or the complete transport mission. A transport mission comprises use of the auxiliary device 110 and the use may be for example to load, unload, dig, pump, plow etc.

### Step 203

The digital twin 105 may compare the modelled power drawn by the auxiliary device 110 with expected power available by the heavy-duty vehicle 100. Information indicating the expected power that is available by the heavy-duty vehicle 100 may be known by the digital twin 105 at start of the method or obtained by the digital twin 105, e.g. from another unit, at some point before step 203 is performed. The expected power that is available by the heavy-duty vehicle 100 may be an average expected power, it may be the expected power for a certain time period, it may be the expected power for a part of or a complete transport mission that the heavy-duty vehicle 100 will perform etc.

### Step 204

The digital twin 105 may determine, based on a result of the comparison, if the expected power available by the heavy-duty vehicle 100 is sufficient to power to the auxiliary device 110. With this, it may be possible to provide an indication of whether or not the heavy-duty vehicle 100 is able to power the auxiliary device 110 or if an external power source may be necessary. It may also be possible to provide an indication of an amount of time that the heavy-duty vehicle 100 may power the auxiliary device 110 with its expected available amount of power and a time instance for when the auxiliary device 110 will stop functioning due to loss of power or when an external power source must be connected. With the determining in step 204, the digital twin 105 may determine if the expected power available by the heavy-duty vehicle 100 is sufficient to power to the auxiliary device 110 in average, for a certain time period, for a part of or a complete transport mission etc.

The digital twin 105 may take variations such as transport mission, environmental factors, weather, traffic etc. into account when determining if the expected power available by the heavy-duty vehicle 100 is sufficient to power to the auxiliary device 110.

The digital twin 105 may compare different bodies within the same application and segment, within different applications, compare each body function and activity when determining if the expected power available by the heavy-duty vehicle 100 is sufficient to power to the auxiliary device 110.

### Step 205

The digital twin 105 may model power drawn by multiple auxiliary devices 110 of different types. The types may be, but not limited to, for example a tail lift, a crane, a cement mixer, a hook-lift, a cooler or a waste compressor.

### Step 206

The digital twin 105 may compare the modelled power of the multiple auxiliary devices 110.

### Step 207

The digital twin 105 may determine, based on a result of the comparison, which of the multiple auxiliary devices 110 that draws the highest or lowest amount of power. In other words, the digital twin 105 may determine a performance of each of the auxiliary devices 110. With this, the flexibility of the modelling is increased. It provides modelling for a large number of different scenarios. With the determining of which of the multiple auxiliary devices 110 that draws the highest or lowest amount of power, it may be possible to select the auxiliary device 110 that draws the amount of power that is most compatible with the expected power that is available at the vehicle 100. It may also provide information indicating which types of auxiliary devices 110 that are most suitable and/or less suitable to be connected to the vehicle 100 in terms of power. The information may be provided to an external system such as e.g. a central sever, a user equipment such as a mobile phone or tablet computer used by an operator, a vehicle driver etc, to a cloud memory, etc. For example, the auxiliary device 110 that draw the lowest amount of power may be more suitable to be connected to the vehicle 100 because then a larger number of auxiliary device 110may be connected to the vehicle 100 at the same time and considering the expected power that is available at the vehicle 100. If an auxiliary device 110 that draw the lowest amount of power, the auxiliary device 110 may be provided with power from the vehicle 100 for a longer time period compared to an auxiliar device that draw the highest amount of power.

The digital twin 105 may arrange or structure the performance of each of the auxiliary devices 110 in different activity or performance bins.

### Step 208

The digital twin 105 may model the expected vehicle configuration that is required for connecting the auxiliary device 110 to the vehicle 100.

### Step 209

The digital twin may compare the expected vehicle configuration with the current vehicle configuration.

### Step 210

The digital twin 105 may determine, based on a result of the comparison, if the expected vehicle configuration maps with the current vehicle configuration or if the current vehicle configuration needs to be changed in order to map to the vehicle configuration.

### Step 211

The digital twin 105 may model an expected vehicle lifetime if the auxiliary device 110 is connected to the vehicle 100 for a period of time.

### Step 212

The digital twin 105 may compare the expected vehicle lifetime with a current vehicle lifetime.

### Step 213

The digital twin 105 may determine, based on a result of the comparison, if the expected vehicle lifetime is shorter lor longer than the current vehicle lifetime.

The digital twin 105 for the heavy-duty vehicle 100 is arranged to perform the method described herein.

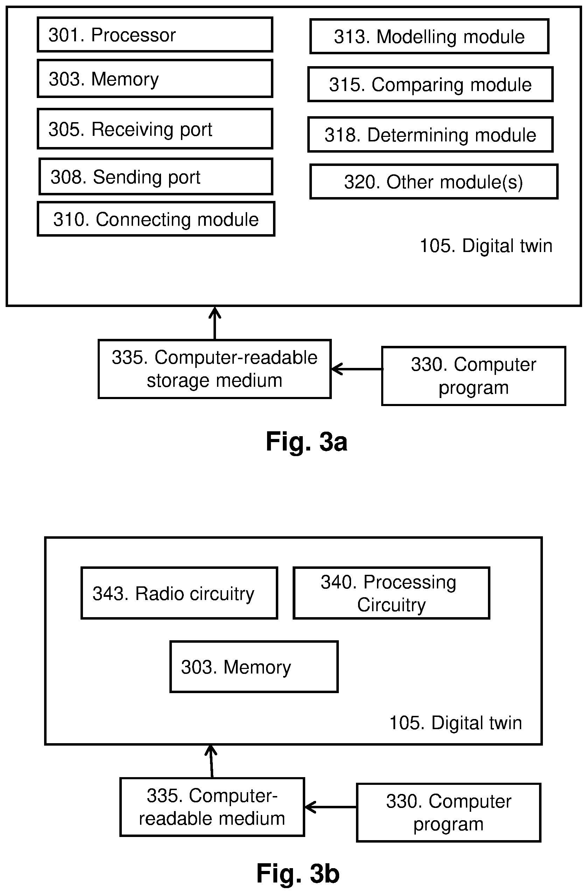

The digital twin 105 is arranged to perform the method described herein. The digital twin 105 comprises a digital model of the heavy-duty vehicle 100. The digital twin 105 comprises one or more interfaces 115. Each interface 115 is arranged to connect to a replaceable digital module 118 associated with an auxiliary device 110 of the heavy-duty vehicle 100. To perform the method steps shown in fig. 2 the digital twin 105 may comprise an arrangement as shown in one or both of **fig. 3a** and/or **fig. 3b.** Fig. 3a and fig. 3b depict two different examples of the arrangement that the digital twin 103 may comprise.

The present disclosure related to the digital twin 105 may be implemented through one or more processors, such as a **processor 301** depicted in fig. 3a, together with computer program code for performing the functions and actions described herein. A processor, as used herein, may be understood to be a hardware component. The program code mentioned above may also be provided as a computer program product, for instance in the form of a data carrier carrying computer program code for performing the present disclosure when being loaded into the digital twin 105. One such carrier may be in the form of a CD ROM disc. It is however feasible with other data carriers such as a memory stick. The computer program code may be provided as pure program code on a server and downloaded to the digital twin 105.

The digital twin 105 may comprise a **memory 303** comprising one or more memory units. The memory 303 is arranged to be used to store obtained information, store data, configurations, schedulings, and applications etc. to perform the methods herein when being executed in the digital twin 105.

The digital twin 105 may receive information and/or data from, e.g. the vehicle 100, the interface 115, a replaceable digital module 118, digital model of the heavy-duty vehicle's 100 operating environment, another digital twin(s), the computer unit 120, a central computer or another structure, through a **receiving port 305.** The receiving port 305 may be, for example, connected to one or more antennas in digital twin 105. The digital twin 105 may receive information from another structure in the system through the receiving port 305. Since the receiving port 305 may be in communication with the processor 301, the receiving port 305 may then send the received information to the processor 301. The receiving port 305 may also be configured to receive other information.

The processor 301 in the digital twin 105 may be configured to transmit or send information to e.g. the vehicle 100, the interface 115, a replaceable digital module 118, digital model of the heavy-duty vehicle's 100 operating environment, another digital twin(s), the computer unit 120, a central computer or another structure in the system, through a **sending port 308,** which may be in communication with the processor 301, and the memory 303.

The digital twin 105 may comprise a **connecting module 310, a modelling module 313, a comparing module 315, a determining module 318, other module(s) 320** etc.

The digital twin 105 is arranged to, e.g. by means of the connecting module 310, connect, via the interface 115, to a replaceable digital module 118 associated with an auxiliary device 110 of the heavy-duty vehicle 100. The auxiliary device 110 may be a tail lift, a crane, a cement mixer, a hook-lift, a cooler or a waste compressor. The connecting module 310 may also be referred to as a connecting unit, a connecting means, a connecting circuit, means for connecting etc. The connecting module 310 may be a processor 301 of the digital twin 105 or comprised in the processor 301 of the digital twin 105.

The digital twin 105 may be arranged to, e.g. by means of the modelling module 313, model power drawn by the auxiliary device 110 in response to an operating state of the auxiliary device 110. The modeling may be based on data indicative of the power. The data may be transferred between the digital twin 105 and the replaceable digital module 118 via the interface 115. A vehicle state of the heavy-duty vehicle 100 may be taken into account when modelling the power. The digital twin 105 may comprise a digital model of the heavy-duty vehicle's 100 operating environment. The modelling of the power may take the operating environment into account. The modelling module 313 may also be referred to as a modelling unit, a modelling means, a modelling circuit, means for modelling etc. The modelling module 313 may be a processor 301 of the digital twin 105 or comprised in the processor 301 of the digital twin 105.

The digital twin 105 may be arranged to, e.g. by means of the comparing module 315, compare the modelled power drawn by the auxiliary device 110 with expected power available by the heavy-duty vehicle 100. The comparing module 315 may also be referred to as a comparing unit, a comparing means, a comparing circuit, means for comparing etc. The comparing module 315 may be a processor 301 of the digital twin 105 or comprised in the processor 301 of the digital twin 105.

The digital twin 105 may be arranged to, e.g. by means of the determining module 318, determine, based on a result of the comparison, if the expected power available by the heavy-duty vehicle 100 is sufficient to power to the auxiliary device 110. The determining module 318 may also be referred to as a determining unit, a determining means, a determining circuit, means for determining etc. The determining module 318 may be a processor 301 of the digital twin 105 or comprised in the processor 301 of the digital twin 105.

The digital twin 105 may be arranged to, e.g. by means of the modelling module 313, model power drawn by multiple auxiliary devices 110 of different types.

The digital twin 105 may be arranged to, e.g. by means of the comparing module 315, compare the modelled power of the multiple auxiliary devices 110.

The digital twin 105 may be arranged to, e.g. by means of the determining module 318, determine, based on a result of the comparison, which of the multiple auxiliary devices 110 that draws the highest or lowest amount of power.

Those skilled in the art will also appreciate that the connecting module 310, a modelling module 313, a comparing module 315, a determining module 318, other module(s) 320 etc. described above may refer to a combination of analogue and digital circuits, and/or one or more processors configured with software and/or firmware, e.g., stored in memory, that, when executed by the one or more processors such as the processor 301, perform as described above. One or more of these processors, as well as the other digital hardware, may be comprised in a single Application-Specific Integrated Circuit (ASIC), or several processors and various digital hardware may be distributed among several separate components, whether individually packaged or assembled into a System-on-a-Chip (SoC).

The different units 310-320 described above may be implemented as one or more applications running on one or more processors such as the processor 301.

Thus, the methods described herein for the digital twin 105 may be respectively implemented by means of a **computer program 330** product, comprising instructions, i.e., software code portions, which, when executed on at least one processor 301, cause the at least one processor 301 to carry out the actions described herein, as performed by the digital twin 105. The computer program 330 product may be stored on a **computer-readable storage medium 335.** The computer-readable storage medium 335, having stored thereon the computer program 330, may comprise instructions which, when executed on at least one processor 301, cause the at least one processor 301 to carry out the actions described herein, as performed by the digital twin 105. The computer-readable storage medium 335 may be a non-transitory computer-readable storage medium, such as a CD ROM disc, or a memory stick. The computer program 330 product may be stored on a carrier containing the computer program 330 just described, wherein the carrier is one of an electronic signal, optical signal, radio signal, or the first computer-readable storage medium 335, as described above.

The digital twin 105 may comprise a communication interface configured to facilitate communications between the digital twin 105 and other units, systems or devices, e.g., , e.g. the vehicle 100, the interface 115, a replaceable digital module 118, digital model of the heavy-duty vehicle's 100 operating environment, another digital twin(s), the computer unit 120, a central computer or another structure. The interface may comprise a transceiver configured to transmit and receive radio signals over an air interface in accordance with a suitable standard.

The digital twin 105 may comprise the following arrangement depicted in fig.3b. The digital twin 105 may comprise a **processing circuitry 340,** e.g., one or more processors such as the processor 301, in the digital twin 105 and the memory 303. The digital twin 105 may also comprise a **radio circuitry 343,** which may comprise e.g., the receiving port 305 and the sending port 305. The processing circuitry 340 may be configured to, or operable to, perform the method actions according to fig. 2, in a similar manner as that described in relation to fig. 3a. The radio circuitry 343 may be configured to set up and maintain at least a wireless connection with the digital twin 105. Circuitry may be understood herein as a hardware component.

Hence, the present disclosure also relates to the digital twin 105. The digital twin 105 may comprise the processing circuitry 340 and the memory 303. The memory 303 comprises instructions executable by the processing circuitry 340. The digital twin 105 is operative to perform the actions described herein in relation to the digital twin 105, e.g., in fig. 2.

The method described herein for the digital twin 105 may be implemented through one or more processors, e.g. comprised in the computer unit 120, the vehicle 100 or in any other suitable unit, together with computer program code for performing the functions of the embodiments herein. The processor may be for example a Digital Signal Processor (DSP), Application Specific Integrated Circuit (ASIC) processor, Field-programmable gate array (FPGA) processor or microprocessor. The program code mentioned above may also be provided as a computer program product, for instance in the form of a data carrier carrying computer program code for performing the embodiments herein. One such carrier may be in the form of a CD ROM disc. It is however feasible with other data carriers such as a memory stick. The computer program code can furthermore be provided as pure program code on a server and downloaded to the computer unit 120.

The heavy-duty vehicle 100 may comprise the digital twin 105 described herein.

A computer program may comprise program code means for performing the steps of the method described herein when said program is run on a computer. A computer readable medium may carry a computer program comprising program code means for performing the method describe herein when said program product is run on a computer.

Summarized, the present invention improves the accuracy of the digital twin 105 by one or more plug-in modules representing auxiliary devices 110. The digital twin 105 comprises a digital model of the vehicle 100 and possibly also of the operating environment in which the vehicle 100 is operating, e.g., common loads, encountered road conditions such as gravel, low friction, temperature, humidity etc. The digital twin 105 provides interfaces 115, e.g. sockets, for interacting with a replaceable digital module 118 associated with an auxiliary device 110 of the heavy-duty vehicle. The replaceable digital module 118 may be arranged to model the operation of an auxiliary device 110, such as a tail lift in terms of, e.g., power consumption. This allows the accuracy of the digital twin 105 increase, and to also be more dynamic, allowing convenient update if the vehicle 100 is reconfigured with other auxiliary devices 110.

The digital twin 105 is configured to model a heavy-duty vehicle 100. The digital twin comprises a set of interfaces 115 where each interface 115 is arranged to connect to a replaceable digital module associated with an auxiliary device 110 of the vehicle 100. The digital twin 105 may model a power drawn by the auxiliary device 110 in response to an operating state. The digital twin 105 may model a cost of operating the auxiliary device 110, e.g., a cost of providing connectivity.

The term "at least one of A and B" should be understood to mean "only A, only B, or both A and B.", where A and B are any parameter, number, indication used herein etc.

The term "adapted to" used herein may also be referred to as "arranged to", "configured to", "capable of' or "operative to".

It is to be understood that the present invention is not limited to the embodiments described herein and illustrated in the drawings; rather, the skilled person will recognize that many changes and modifications may be made within the scope of the appended claims.

## Claims

1. A digital twin (105) for a heavy-duty vehicle (100),
wherein the digital twin (105) comprises a digital model of the heavy-duty vehicle (100),
wherein the digital twin (105) comprises one or more interfaces (115),
wherein each interface (115) is arranged to connect to a replaceable digital module (118) associated with an auxiliary device (110) of the heavy-duty vehicle (100).

2. The digital twin (105) according to claim 1, wherein the digital twin (105) is arranged to model power drawn by the auxiliary device (110) in response to an operating state of the auxiliary device (110).

3. The digital twin (105) according to claim 2, wherein each interface (115) is arranged to transfer data between the digital twin (105) and the replaceable digital module (118) indicative of the power drawn by the auxiliary device (110) in response to an operating state of the auxiliary device (110), and
wherein the modeling is based on the data indicative of the power.

4. The digital twin (105) according to either of the claims 2-3, wherein the digital twin (105) is arranged to take vehicle state of the heavy-duty vehicle (100) into account when modelling the power.

5. The digital twin (105) according to any of the preceding claims, wherein the auxiliary device (110) is a tail lift, a crane, a cement mixer, a hook-lift, a cooler or a waste compressor.

6. The digital twin (105) according to any of claims 2-5, wherein the digital twin (105) comprises a digital model of the heavy-duty vehicle's (100) operating environment, and wherein the modelling of the power takes the operating environment into account.

7. The digital twin (105) according to any of claims 2-6, wherein the digital twin (105) is arranged to:
compare the modelled power drawn by the auxiliary device (110) with expected power available by the heavy-duty vehicle (100); and to
determine, based on a result of the comparison, if the expected power available by the heavy-duty vehicle (100) is sufficient to power to the auxiliary device (110).

8. The digital twin (105) according to any of the preceding claims, wherein the digital twin (105) is arranged to:
model power drawn by multiple auxiliary devices (110) of different types;
compare the modelled power of the multiple auxiliary devices (110); and to
determine, based on a result of the comparison, which of the multiple auxiliary devices (110) that draws the highest or lowest amount of power.

9. A method performed by a digital twin (105) for a heavy-duty vehicle (100),
wherein the digital twin (105) comprises a digital model of the heavy-duty vehicle (100),
wherein the digital twin (105) comprises one or more interfaces (115),
the method comprising:
*connecting* (201), via the interface (115), to a replaceable digital module (118) associated with an auxiliary device (110) of the heavy-duty vehicle (100).

10. The method according to claim 9, comprising:
*modelling* (202) power drawn by the auxiliary device (110) in response to an operating state of the auxiliary device (110).

11. The method according to claim 10, wherein the modeling is based on data indicative of the power, and wherein the data is transferred between the digital twin (105) and the replaceable digital module (118) via the interface (115).

12. The method according to either of the claims 10-11, wherein a vehicle state of the heavy-duty vehicle (100) is taken into account when modelling the power.

13. The method according to any of claims 9-12, wherein the auxiliary device (110) is a tail lift, a crane, a cement mixer, a hook-lift, a cooler or a waste compressor.

14. The method according to any of claims 9-13, wherein the digital twin (105) comprises a digital model of the heavy-duty vehicle's (100) operating environment, and
wherein the modelling of the power takes the operating environment into account.

15. The method according to any of claims 9-14, comprising:
*comparing* (203) the modelled power drawn by the auxiliary device (110) with expected power available by the heavy-duty vehicle (100); and
*determining* (204), based on a result of the comparison, if the expected power available by the heavy-duty vehicle (100) is sufficient to power to the auxiliary device (110).

16. The method according to any of claims 9-15, comprising:
*modelling* (205) power drawn by multiple auxiliary devices (110) of different types;
*comparing* (206) the modelled power of the multiple auxiliary devices (110); and to
*determining* (207), based on a result of the comparison, which of the multiple auxiliary devices (110) that draws the highest or lowest amount of power.

17. A heavy-duty vehicle (100) comprising the digital twin (105) of any of claims 1-8.

18. A computer program comprising program code means for performing the steps of any of claims 9-16 when said program is run on a computer.

19. A computer readable medium carrying a computer program comprising program code means for performing the steps of any of claims 9-16 when said program product is run on a computer.
